# EUROPÄISCHE PATENTSCHRIFT

(11) **EP 3 325 853 B1**
(45) Veröffentlichungstag und Bekanntmachung des Hinweises auf die Patenterteilung: **07.04.2021**
(21) Anmeldenummer: 16729776.1
(22) Anmeldetag: 11.06.2016
(51) Int. Cl.: F16H 61/32, F16H 61/686, F16D 27/115, F16H 3/66

(54) **KRAFTFAHRZEUGGETRIEBE, INSBESONDERE MEHRSTUFENGETRIEBE**
MOTOR VEHICLE TRANSMISSION, IN PARTICULAR MULTI-STEP TRANSMISSION
TRANSMISSION DE VÉHICULE AUTOMOBILE, NOTAMMENT TRANSMISSION À PLUSIEURS ÉTAGES

(30) Priorität: 08.07.2015 DE 102015008830
(43) Veröffentlichungstag der Anmeldung: 30.05.2018
(73) Patentinhaber: Daimler AG, 70372 Stuttgart (DE)
(72) Erfinder: APPELTAUER, Peter, 70736 Fellbach (DE)
(74) Vertreter: JENSEN & SON
(86) Internationale Anmeldenummer: PCT/EP2016/000971
(87) Internationale Veröffentlichungsnummer: WO 2017/005340

(56) Entgegenhaltungen:
- EP-A1- 0 905 396
- EP-A1- 0 905 397
- EP-A2- 0 848 178
- US-A1- 2010 043 586
- US-A1- 2010 071 497

## Beschreibung

Die Erfindung betrifft ein Kraftfahrzeuggetriebe mit zumindest einer Schalteinheit.

Aus der DE 10 2008 055 626 A1 ist bereits ein Kraftfahrzeuggetriebe, insbesondere Mehrstufengetriebe, mit zumindest einer Schalteinheit, die zwei relativ zueinander verdrehbare, drehfest miteinander verbindbare Koppelelemente aufweist, bekannt.

Aus der EP 0905397 A1, der EP 0905396 A1, der EP 0848178 A2 sind Kupplungsanordnungen mit jeweils einem Kugelrampenmechnaismus mit einem Planetengetriebe und mit elektromagnetischer Betätigung bekannt.

Ferner sind aus der gattungsgemäßen DE 10 2006 049 275 A1 bzw. der daraus abgeleiteten US 20100071497 A1 und US 20100043586 A1 Kraftfahrzeuggetriebe mit zumindest einer Schalteinheit, die zwei relativ zueinander verdrehbare, drehfest miteinander verbindbare Koppelelemente sowie einen elektromechanischen Betätigungsaktuator aufweist, und mit einer Steuer- und/oder Regeleinheit, die zur Ansteuerung des zumindest einen Betätigungsaktuatorsvorgesehen ist, bekannt, wobei das Kraftfahrzeuggetriebe eine induktiveVerbindungseinheit, die die Steuer- und/oder Regeleinheit (18a) und den Betätigungsaktuator miteinander verbindet und die zumindest dazu vorgesehen ist, den Betätigungsaktuator mit elektrischer Energie zu versorgen, aufweist.

Der Erfindung liegt insbesondere die Aufgabe zugrunde, ein insbesondere hinsichtlich seiner Verlustleistung verbessertes Kraftfahrzeuggetriebe bereitzustellen. Sie wird durch eine erfindungsgemäße Ausgestaltung entsprechend dem Anspruch 1 gelöst. Weiterbildungen der Erfindung ergeben sich aus den abhängigen Ansprüchen.

Die Erfindung geht von einem Kraftfahrzeuggetriebe aus, insbesondere einem Mehrstufengetriebe, mit zumindest einer Schalteinheit, die zwei relativ zueinander verdrehbare, drehfest miteinander verbindbare Koppelelemente sowie einen Betätigungsaktuator aufweist, und mit einer Steuer- und/oder Regeleinheit, die zur Ansteuerung des zumindest einen Betätigungsaktuators vorgesehen ist.

Weiter wird davon ausgegangen, dass das Kraftfahrzeuggetriebe zumindest eine induktive Verbindungseinheit aufweist, die die Steuer- und/oder Regeleinheit und den Betätigungsaktuator miteinander verbindet und die zumindest dazu vorgesehen ist, den Betätigungsaktuator mit elektrischer Energie zu versorgen. Dadurch kann die Schalteinheit durch Getriebebauteile hindurch mit elektrischer Energie versorgt werden, ohne dass Übergabestellen an diesen Getriebebauteile notwendig sind. Insbesondere durch drehbare Getriebebauteile hindurch kann der Betätigungsaktuator einfach mit Energie versorgt werden, wodurch insbesondere im Vergleich mit hydraulischen Betätigungsaktuaktoren, eine verbesserte Energieübertragung realisiert werden kann. Übergabestellen, die eine druckbeständige Abdichtung erfordern, können entfallen. Insbesondere wenn die Schalteinheit innenliegend angeordnet ist, d.h. eine Energieversorgung durch zumindest ein drehbar gelagertes Getriebebauteil zwingend erforderlich ist, kann eine Verlustleistung durch Entfall von Übergabestellen verringert werden. Es kann ein Mehrstufengetriebe bereitgestellt werden, dessen Verlustleistung mit dem eines Handschaltgetriebes vergleichbar ist. Zudem kann ein Betriebsmittelsystem vereinfacht werden, wenn auf Übergabestellen verzichtet werden kann. Es kann somit ein insbesondere hinsichtlich seiner Verlustleistung verbessertes Kraftfahrzeuggetriebe bereitgestellt werden. Unter einer "Steuer- und/oder Regeleinheit" soll insbesondere eine Einheit mit zumindest einem Steuergerät verstanden werden. Unter einem "Steuergerät" soll insbesondere eine Einheit mit einer Prozessoreinheit und mit einer Speichereinheit sowie mit einem in der Speichereinheit gespeicherten Betriebsprogramm verstanden werden. Grundsätzlich kann die Steuer- und/oder Regeleinheit mehrere untereinander verbundene Steuergeräte aufweisen, die vorzugsweise dazu vorgesehen sind, über ein Bus-System, wie insbesondere ein CAN-Bus-System, miteinander zu kommunizieren. Unter "vorgesehen" soll insbesondere speziell programmiert, ausgelegt und/oder ausgestattet verstanden werden.

Weiter wird davon ausgegangen, dass die induktive Verbindungseinheit eine gehäuseseitige Primärspule umfasst, die mit der Steuer- und/oder Regeleinheit verbunden ist, und eine kupplungsseitige Sekundärspule, die mit dem Betätigungsaktuator verbunden ist. Dadurch kann die Verbindungseinheit besonders kompakt ausgebildet werden. Insbesondere die Übertragung der Steuersignale und gleichzeitig eine Übertraung der elektrischen Leistung kann mittels einer Primärspule und einer Sekundärspule einfach realisiert werden.

Erfindungsgemäß wird vorgeschlagen, dass der Betätigungsaktuator ein Planetenradgetriebe nach dem Wolfrom-Prinzip aufweist, wobei das Planetenradgetriebe ein Sonnenrad, einen Planetenradträger, auf dem Planetenradträger jeweils paarweise angeordnete Planetenräder sowie zwei Hohlräder, nämlich ein erstes Hohlrad und eine zweites Hohlrad, von denen eines drehfest mit einem der Koppelelemente verbunden ist, aufweist

Ferner ist erfindungsgemäß vorgesehen, dass die Planetenräder des Planetengetriebes paarweise drehfest miteinander verbunden sind.

Ferner ist erfindungsgemäß vorgesehen, dass der Betätigungsaktuator einen Elektromotor aufweist, der in das Planetenradgetriebe integriert ist, wobei der Elektromotor einen gegenüber dem ersten Hohlrad ortsfest angeordneten Stator und einen drehfest mit dem Sonnenrad verbundenen Rotor aufweist, wobei der Stator drehfest mit dem zweiten Koppelelement verbunden ist und eine Mehrzahl von Spulen umfasst, wobei das Sonnenrad an seinem Innenumfang eine Aufnahme für Permanentmagnete des Rotors ausbildet, wobei die Permanentmagnete gleichmäßig über den Innenumfang des Sonnenrads verteilt sind.

In einer ersten Weiterbildung wird vorgeschlagen, dass die induktive Verbindungseinheit zur Übertragung von Steuersignalen für eine Ansteuerung und/oder Überwachung des Betätigungsaktuators vorgesehen ist. Insbesondere wird vorgeschlagen, dass die induktive Verbindungseinheit zur bidirektionalen Übertragung von Steuersignalen für eine Ansteuerung und/oder Überwachung des Betätigungsaktuators vorgesehen ist. Indem gleichzeitig Steuersignale über die Verbindungseinheit übertragen werden können, kann eine Ansteuerung des Betätigungsaktuators einfach ausgestaltet werden. Insbesondere muss die Steuer- und/oder Regeleinheit lediglich dazu vorgesehen werden, eine Leistung für die Energieversorgung des Betätigungsaktuators bereitzustellen. Eine Einstellung der von dem Betätigungsaktuator aufgenommenen Leistung kann durch eine Elektronikeinheit des Betätigungsaktuators eingestellt werden. Übertragungsverluste, welche die Verbindungseinheit aufweist, können bei einer Einstellung der aufgenommenen Leistung unberücksichtigt bleiben. Unter einer "Übertragung von Steuersignalen" soll dabei insbesondere eine Übertragung von Signalen durch eine Modulation eines elektrischen Feldes innerhalb der Verbindungseinheit verstanden werden.

Weiter wird vorgeschlagen, dass das Kraftfahrzeuggetriebe zumindest eine zwischen der Primärspule und der Sekundärspule angeordnete Getriebewelle, die zumindest teilweise aus einem Material mit einer niedrigen magnetischen Permeabilität besteht, aufweist. Dadurch können Übertragungsverluste gering gehalten werden. Alternativ oder zusätzlich können zwischen der Primärspule und der Sekundärspule auch weitere Getriebebauteile, wie beispielsweise ein Teil des Getriebegehäuses, angeordnet sein, die vorzugsweise ebenfalls eine niedrige magnetische Permeabilität aufweisen. Unter einer niedrigen magnetischen Permeabilität soll insbesondere verstanden werden, dass eine Permeabilitätszahl eines Materials, aus dem das zumindest eine Getriebebauteil besteht, kleiner als 300, vorzugsweise kleiner als 200 und besonders bevorzugt kleiner als 100 ist. Vorzugsweise ist die Getriebewelle und/oder das Getriebebauteil aus einem nichtmetallischen Material, wie beispielsweise Kunststoff oder Keramik, wodurch auch eine magnetischen Permeabilität mit einer Permeabilitätszahl kleiner als 1 realisiert werden kann.

In einer besonders vorteilhaften Ausgestaltung ist der Betätigungsaktuator mechanisch selbsthemmend ausgeführt. Dadurch braucht die Verbindungseinheit lediglich zur Übertragung einer Leistung vorgesehen werden, die zur Verstellung der Schalteinheit notwendig ist. Es kann darauf verzichtet werden, die Verbindungseinheit zur Übertragung einer Leistung vorzusehen, welche notwendig ist, um die Schalteinheit in einer Offen-Stellung oder einer Geschlossen-Stellung zu halten. Zudem kann erreicht werden, dass die Energieaufnahme des Betätigungsaktuators in der Offen-Stellung und der Geschlossen-Stellung Null oder zumindest nahezu Null ist, wodurch eine Verlustleistung des Kraftfahrzeuggetriebes weiter gesenkt werden kann. Unter "mechanisch selbsthemmend" soll insbesondere verstanden werden, dass der Betätigungsaktuator zumindest eine Mechanik, wie insbesondere ein Getriebe, aufweist, durch die der Betätigungsaktuator eine aktuell vorliegende Einstellung hält, wenn eine Energiezufuhr unterbrochen wird. Insbesondere wird darunter keine Verrastung verstanden, welche eine energielose Fixierung lediglich in vordefinierten Einstellungen, wie beispielsweise einer Offen-Stellung oder einer Geschlossen-Stellung, ermöglicht. Unter einer "Schaltstellung" soll in diesem Zusammenhang insbesondere eine Stellung des Betätigungsaktuators in einem beliebigen Schaltzustand der Schalteinheit verstanden werden.

Weitere Vorteile ergeben sich aus der folgenden Figurenbeschreibung. In den Figuren sind zwei Ausführungsbeispiele der Erfindung dargestellt. Die Figuren, die Figurenbeschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: ein Getriebeschema für ein Kraftfahrzeuggetriebe,
- Fig. 2: einen Ausschnitt aus dem Kraftfahrzeuggetriebe in einer schematisierten Darstellung mit einer Schalteinheit,
- Fig. 3: einen Betätigungsaktuator der Schalteinheit,
- Fig. 4: eine Darstellung eines Spreizmechanismus des Betätigungsaktuators und
- Fig. 5: einen Betätigungsaktuator mit einem alternativ ausgebildeten Spreizmechanismus.

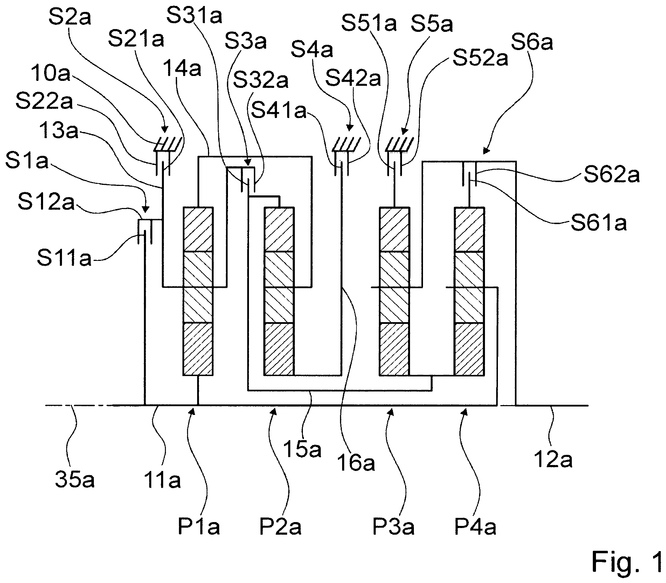

Die Figur 1 zeigt ein Getriebeschema für ein an sich bekanntes Kraftfahrzeuggetriebe. Das Kraftfahrzeuggetriebe ist als ein Mehrstufengetriebe ausgebildet. Das dargestellte Kraftfahrzeuggetriebe umfasst ein Getriebegehäuse 10a und vier Planetenradstufen P1a, P2a, P3a, P4a sowie sechs Schalteinheiten S1a, S2a, S3a, S4a, S5a, S6a, die innerhalb des Getriebegehäuses 10a angeordnet sind. Weiter umfasst das Kraftfahrzeuggetriebe eine Mehrzahl von Getriebewellen 11a, 12a, 13a, 14a, 15a, 16a. Jede der Planetenradstufen P1a, P2a, P3a, P4a umfasst ein Sonnenrad, ein Hohlrad und einen Planetenradträger sowie Planetenräder. Die Schalteinheiten S1a, S2a, S3a, S4a, S5a, S6a umfassen jeweils zwei Koppelelemente S11a, S12a, S21a, S22a, S31a, S32a, S41a, S42a, S51a, S52a, S61a, S62a. Die Koppelelemente S11a, S12a, S21a, S22, S61a, S62 der als Kupplungen ausgeführten Schalteinheiten S1a, S2a, S6a sind jeweils drehbar gelagert. Das eine Koppelelement S31a, S41a, S51a der als Bremsen ausgebildeten Schalteinheiten S3a, S4a, S5a ist drehbar gelagert angeordnet, während das andere Koppelelement S32a, S42a, S52 dieser Schalteinheiten S3a, S4a, S5a gehäusefest angeordnet ist. Die Koppelelemente S11a, S12a, S21a, S22a, S31a, S41a, S51a, S61a, S62a sind teilweise direkt mit zumindest einem der Sonnenräder, Hohlräder und/oder Planetenradträger verbunden. Die Getriebewellen 11a, 12a, 13a, 14a, 15a, 16a verbinden die Koppelelemente, Sonnenräder, Hohlräder und/oder Planetenradträger miteinander, wenn diese beabstandet zueinander angeordnet sind.

Das Kraftfahrzeuggetriebe umfasst weiter eine Mehrzahl von Betätigungsaktuatoren, die zur Betätigung der Schalteinheiten S1a, S2a, S3a, S4a, S5a, S6a vorgesehen sind. Jede der Schalteinheiten S1a, S2a, S3a, S4a, S5a, S6a umfasst einen der Betätigungsaktuatoren, der zum Schließen und/oder Öffnen der entsprechenden Schalteinheiten S1a, S2a, S3a, S4a, S5a, S6a vorgesehen ist. Die Betätigungsaktuatoren können unterschiedlich ausgebildet sein. Grundsätzlich können die Betätigungsaktuatoren elektromechanisch, hydraulisch und/oder pneumatisch ausgebildet werden. In dem dargestellten Ausführungsbeispiel sind zumindest die Betätigungsaktuatoren der Schalteinheiten S3a, S6a elektromechanisch ausgeführt. Im Folgenden wird lediglich der Betätigungsaktuator 17a der Schalteinheit S3a beschrieben. Der nicht näher dargestellte Betätigungsaktuator der Schalteinheit S6a kann analog ausgebildet werden.

Zur Ansteuerung der Betätigungsaktuatoren umfasst das Kraftfahrzeuggetriebe eine Steuer- und Regeleinheit 18a. Die Steuer- und Regeleinheit 18a ist entsprechend den Betätigungsaktuatoren ausgebildet. Ist zumindest ein Teil der Betätigungsaktuatoren hydraulisch ausgebildet, umfasst die Steuer- und Regeleinheit 18a zumindest eine hydraulische Komponente zur Ansteuerung dieser Betätigungsaktuatoren. Ist, wie im vorliegenden Ausführungsbeispiel, zumindest ein Teil der Betätigungsaktuatoren elektromechanisch ausgebildet, ist die Steuer- und Regeleinheit 18a für eine Ansteuerung dieser Betätigungsaktuatoren vorgesehen. Zudem ist die Steuer- und Regeleinheit 18a dazu vorgesehen, die Betätigungsaktuatoren mit Energie zu versorgen, wobei eine Energieversorgung in Abhängigkeit der Ausgestaltung der Betätigungsaktuatoren als Druckölversorgung oder als elektrische Energieversorgung ausgebildet ist.

Die zwei als Kupplungen ausgeführten Schalteinheiten S3a, S6a sind innenliegend angeordnet. Bauräume, die für die zwei Schalteinheiten S3a, S6a vorgesehenen sind, sind in axialer Richtung und in radialer Richtung durch einen Teil der Planetenradstufen P1a, P2a, P3a, P4a und/oder der Getriebewellen 11a, 12a, 13a, 14a, 15a, 16a begrenzt. Die Bauräume, die für die Schalteinheiten S3a, S6a vorgesehen sind, sind insbesondere nicht allein durch das Getriebegehäuse 10a begrenzt. In dem dargestellten Getriebeschema ist der Bauraum, der für die die Schalteinheit S3a vorgesehen ist, durch die erste Planetenradstufe P1a, die Getriebewelle 15a und die Getriebewelle 14a begrenzt. Eine analoge Einbausituation findet sich bei der zweiten innenliegend angeordneten Schalteinheit S6a (vgl. Figur 1).

Die innenliegenden Schalteinheiten S3a, S6a umfassen die elektromechanisch ausgebildeten Betätigungsaktuatoren. Die beiden Betätigungsaktuatoren sind in analoger Weise an die Steuer- und Regeleinheit 18a angebunden. In der folgenden Beschreibung wird daher insbesondere auf eine Verbindung zwischen der Steuer- und Regeleinheit 18a und dem Betätigungsaktuator 17a der ersten innenliegenden Schalteinheit S3a eingegangen. Eine Verbindung zwischen der Steuer- und Regeleinheit 18a und dem nicht näher dargestellten Betätigungsaktuator der zweiten innenliegenden Schalteinheit S6a kann analog ausgebildet werden.

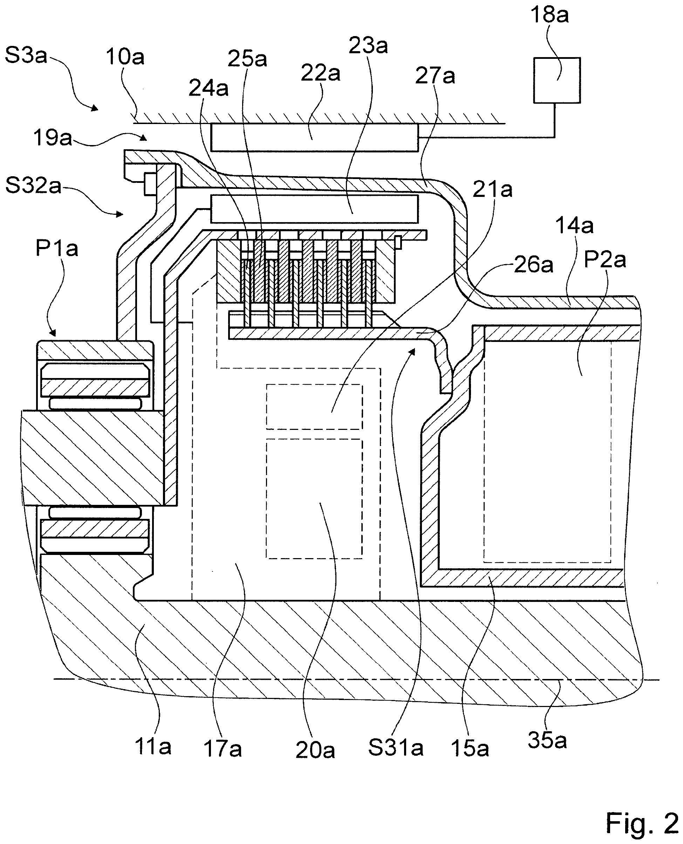

Um die Steuer- und Regeleinheit 18a und den Betätigungsaktuator 17a miteinander zu verbinden, umfasst das Kraftfahrzeuggetriebe eine induktive Verbindungseinheit 19a (vgl. Figur 2). Die Steuer- und Regeleinheit 18a bildet eine Energieversorgung aus, die dazu vorgesehen ist, den Betätigungsaktuator 17a der Schalteinheit S3a mit elektrischer Energie zu versorgen. Die induktive Verbindungseinheit 19a ist dazu vorgesehen, die elektrische Energie zu übertragen. Eine von der Verbindungseinheit 19a maximal übertragbare elektrische Leistung entspricht einer Leistung, die der Betätigungsaktuator 17a maximal benötigt. Der Betätigungsaktuator 17a ist dabei lediglich über die induktive Verbindungseinheit 19a mit der Steuer- und Regeleinheit 18a verbunden. Auf eine zusätzliche Verbindung, welche zur Übertragung von Leistung an den Betätigungsaktuator 17a vorgesehen ist, wird verzichtet. Der Betätigungsaktuator 17a weist in einem Betrieb eine Leistungsaufnahme aus, die höchstens 50 Watt beträgt. Die induktive Verbindungseinheit 19a ist für eine Übertragung von Leistung bis 100 Watt vorgesehen.

Die induktive Verbindungseinheit 19a ist zusätzlich zur Übertragung von Steuersignalen für eine Ansteuerung des Betätigungsaktuators 17a vorgesehen. Die Betätigungsaktuator 17a umfasst eine Elektronikeinheit 20a, die über die Verbindungseinheit 19a an die Steuer- und Regeleinheit 18a angebunden ist. Die Elektronikeinheit 20a ist dazu vorgesehen, die von der Steuer- und Regeleinheit 18a bereitgestellten Steuersignale auszuwerten und in einen entsprechenden Schaltvorgang umzusetzen.

Die Verbindungseinheit 19a ist für eine bidirektionale Signalübertragung vorgesehen. Die Elektronikeinheit 20a des Betätigungsaktuators 17a ist dazu vorgesehen, Statussignale bereitzustellen, welche von der Verbindungseinheit 19a an die Steuer- und Regeleinheit 18a übertragen werden. Der Betätigungsaktuator 17a umfasst eine an die Elektronikeinheit 20a angebundene Sensoreinheit 21a, die dazu vorgesehen ist, unterschiedliche Parameter während eines Betriebs und/oder eines Schaltvorgangs zu erfassen. Beispielsweise kann die Sensoreinheit 21a dazu vorgesehen sein, eine Temperatur der Schalteinheit S3a zu erfassen, insbesondere wenn die Schalteinheit S3a wie in dem dargestellten Ausführungsbeispiel für eine reibschlüssige Verbindung der Koppelelemente S31a, S32a vorgesehen ist. Außerdem kann die Sensoreinheit 21a beispielsweise dazu vorgesehen sein, eine aktuelle Schaltposition und/oder Drehzahlen der Koppelelemente S31a, S32a zu erfassen.

Die induktive Verbindungseinheit 19a umfasst eine gehäuseseitige Primärspule 22a, die mit der Steuer- und/oder Regeleinheit 18a verbunden ist, und eine kupplungsseitige Sekundärspule 23a, die mit der Elektronikeinheit 20a des Betätigungsaktuators 17a verbunden ist. Die Primärspule 22a ist gehäusefest angeordnet. Die Sekundärspule 23a ist gegenüber der Elektronikeinheit 20a ortsfest angeordnet. Die Elektronikeinheit 20a und die Sekundärspule 23a sind vorzugsweise fest mit einem der Koppelelemente S31a, S32a verbunden oder zumindest ortsfest gegenüber einem der Koppelelemente S31a, S32a angeordnet.

Die Schalteinheit S3a ist in dem dargestellten Ausführungsbeispiel als eine Lamellenkupplung ausgebildet. Sie umfasst ein Lamellenpaket mit jeweils wechselweise angeordneten Kupplungslamellen 24a, 25a, welche für eine reibschlüssige Verbindung miteinander vorgesehen sind. Die Schalteinheit S3a umfasst einen Innenlamellenträger 26a, der das erste Kopplungselement S31a zumindest teilweise ausbildet, und einen Außenlamellenträger 27a, der das zweite Koppelelement S32a zumindest teilweise ausbildet. Das erste Koppelelement S31a ist permanent drehfest mit dem Hohlrad der zweiten Planetenradstufe P2a und der Getriebewelle 15a verbunden. Das zweite Koppelelement S32 ist permanent drehfest mit dem Planetenradträger der ersten Planetenradstufe P1a verbunden.

Der Außenlamellenträger 27a bildet einen Spulenträger für die Sekundärspule 23a aus. Die Sekundärspule 23a ist damit fest mit dem Außenlamellenträger 27a verbunden. Die Primärspule 22a ist mit dem Getriebegehäuse 10a verbunden. Die Primärspule 22a und die Sekundärspule 23a sind beabstandet zueinander angeordnet. Die Getriebewelle 14a, die in dem dargestellten Ausführungsbeispiel das Hohlrad der ersten Planetenradstufe P1a mit dem Planetenradträger der zweiten Planetenradstufe P2a verbindet, durchsetzt einen Zwischenraum zwischen der Primärspule 22a und der Sekundärspule 23a.

Die Getriebewelle 14a besteht aus einem Material mit einer niedrigen magnetischen Permeabilität. Die Permeabilität des Materials ist insbesondere kleiner als die von Weichmetall. In dem dargestellten Ausführungsbeispiel besteht die Getriebewelle 14a aus Kohlefaserverbundstoff. Grundsätzlich kann die Getriebewelle 14a auch aus anderen Materialen, vorzugsweise Kunststoffmaterialien oder Kunststoffverbundmaterialien, bestehen. Insbesondere ist es denkbar, dass die Getriebewelle 14a lediglich teilweise aus dem Material mit niedriger magnetischer Permeabilität besteht, insbesondere wenn die Getriebewelle 14a mehrteilig ausgebildet ist. Vorzugsweise besteht die Getriebewelle 14a zumindest in einem Bereich, der durch die Primärspule 22a und die Sekundärspule 23a aufgespannt ist, aus dem Material mit niedriger magnetischer Permeabilität.

Der elektromechanische Betätigungsaktuator 17a ist mechanisch selbsthemmend ausgeführt. Die Energieversorgung des Betätigungsaktuators 17a dient insbesondere der Verstellung der Schalteinheit S3a. Ein aktueller Schaltzustand der Schalteinheit S3a kann gehalten werden, ohne dass dem Betätigungsaktuator 17a elektrische Leistung zugeführt werden muss. Der Betätigungsaktuator 17a hält den Schaltzustand dabei rein mechanisch. Eine Haltekraft zum Halten des Schaltzustands wird durch eine innere Reibung des Betätigungsaktuators 17a bereitgestellt. Der Betätigungsaktuator 17a weist insbesondere keine formschlüssige Verriegelung oder Verrastung auf.

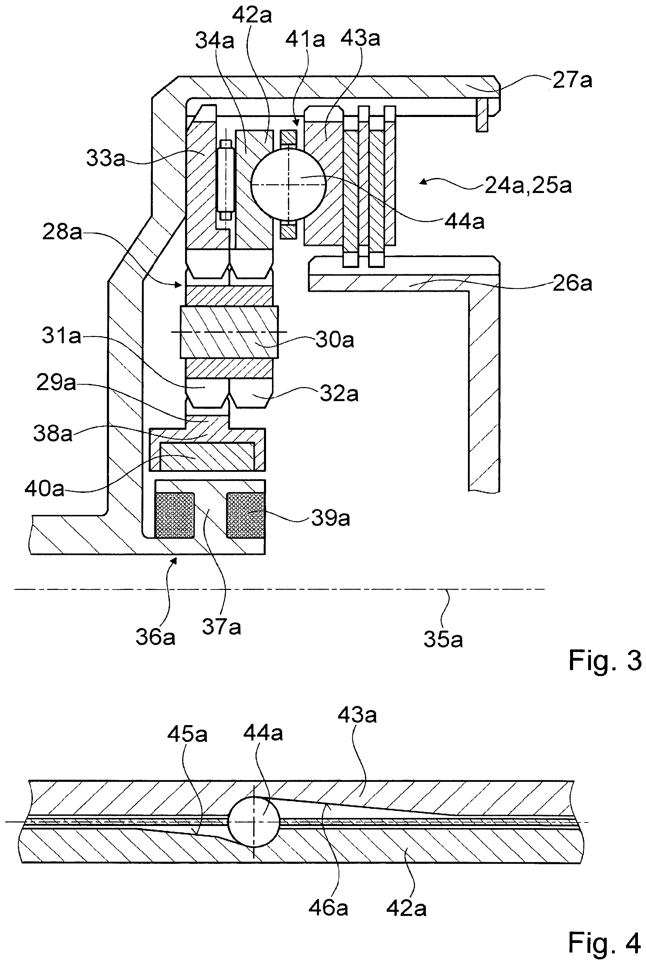

Der Betätigungsaktuator 17a umfasst ein Planetenradgetriebe 28a nach dem Wolfrom-Prinzip (vgl. Figur 3). Das Planetenradgetriebe 28a umfasst ein Sonnenrad 29a, einen Planetenradträger 30a, Planetenräder 31a, 32a sowie zwei Hohlräder 33a, 34a. Das Kraftfahrzeuggetriebe weist eine Hauptrotationsachse 35a auf, zu der das Sonnenrad 29a, der Planetenradträger 30a sowie die Hohlräder 33a, 34a koaxial zueinander angeordnet sind. Das Sonnenrad 29a, der Planetenradträger 30a und das zweite Hohlrad 34a sind drehbar gelagert. Sie sind insbesondere gegenüber der Getriebewelle 11a, die die Schalteinheit S3a durchsetzt, sowie gegenüber den Koppelelementen S31a, S32a der Schalteinheit S3a verdrehbar. Das erste Hohlrad 33a ist drehfest abgestützt. In dem dargestellten Ausführungsbeispiel ist das erste Hohlrad 33a drehfest mit dem zweiten Koppelelement S32a verbunden. Der Planetenradträger 30a und das Sonnenrad 29a können mittels der Hohlräder 33a, 34a gelagert werden.

Die Planetenräder 31a, 32a sind drehbar auf dem Planetenradträger 30a gelagert. Jeweils zwei der Planetenräder 31a, 32a sind koaxial zueinander angeordnet und bilden eine Planetenradpaarung. In Figur 2 sind lediglich die zwei Planetenräder 31a, 32a der einen Planetenradpaarung dargestellt. Weitere Planetenräder können analog angeordnet. werden. Die Planetenräder 31a, 32a der Planetenradpaarung sind einstückig ausgeführt. Alternativ ist auch eine mehrteilige Ausführung denkbar, in der die Planetenräder 31a, 32a paarweise drehfest miteinander verbunden sind. Das erste Planetenrad 31a der Planetenradpaarung kämmt mit dem Sonnenrad 29a und dem ersten Hohlrad 33a. Das zweite Planetenrad 32a der Planetenradpaarung kämmt mit dem zweiten Hohlrad 34a. Das erste Planetenrad 31a und das zweite Planetenrad 32a haben die gleiche Zähnezahl.

Das Planetenradgetriebe 28a weist ein Übersetzungsverhältnis auf, das insbesondere von einer Zähnezahl-Differenz der Hohlräder 33a, 34a abhängt. In dem dargestellten Ausführungsbeispiel weist das zweite Hohlrad 34a einen Zahn mehr auf als das erste Hohlrad 33a. Das Übersetzungsverhältnis des Planetenradgetriebes 28a liegt zwischen 200 und 250, wobei eine Drehbewegung des Sonnenrads 29a in eine langsamere Drehbewegung des zweiten Hohlrads 34a übersetzt wird.

Der Betätigungsaktuator 17a weist einen Elektromotor 36a auf, der in das Planetenradgetriebe 28a integriert ist. Der Elektromotor 36a weist einen gegenüber dem ersten Hohlrad 33a ortsfest angeordneten Stator 37a und einen drehfest mit dem Sonnenrad 29a verbundenen Rotor 38a auf. Der Stator 37a ist drehfest mit dem zweiten Koppelelement S32a verbunden. Der Rotor 38a ist teilweise einstückig mit dem Sonnenrad 29a ausgebildet. Der Stator 37a umfasst eine Mehrzahl von Spulen 39a, die zur Erzeugung eines elektromagnetischen Felds vorgesehen sind. Der Rotor 38a umfasst eine Mehrzahl von Permanentmagneten 40a, welche in Wechselwirkung mit dem von den Spulen 39a erzeugten elektromagnetischen Feld ein Antriebsmoment bewirken. Der Elektromotor 36a ist als ein Schrittmotor ausgebildet. Es ist denkbar, dass eine andere Art eines Elektromotors für den Elektromotor 36a zum Einsatz kommt.

Das Sonnenrad 29a weist an seinem Außenumfang eine Verzahnung zur Wirkverbindung mit den Planetenrädern 31a, 32a auf. An seinem Innenumfang bildet das Sonnenrad 29a eine Aufnahme für die Permanentmagnete 40a des Rotors 38a aus. Das Sonnenrad 29a ist einstückig ausgebildet. Die Permanentmagnete 40a sind gleichmäßig über den Innenumfang des Sonnenrads 29a verteilt. Eine Anordnung der Permanentmagnete 40a und eine Anordnung der Spulen 39a sind aufeinander abgestimmt.

Das Sonnenrad 29a nimmt den Elektromotor 36a auf. Das Sonnenrad 29a spannt einen Bauraum auf, innerhalb dessen der Rotor 38a mit den Permanentmagneten 40a und der Stator 37a mit den Spulen 39a angeordnet ist. Eine axiale Breite des Elektromotors 36a, die durch Abmessungen der Spulen 39a und/oder der Permanentmagnete 40a entlang der Hauptrotationsachse 35a definiert ist, ist kleiner als eine axiale Breite des Sonnenrads 29a. Der Elektromotor 36a ist vollständig innerhalb des Sonnenrads 29a angeordnet.

Die Elektronikeinheit 20a des Betätigungsaktuators 17a ist benachbart zu dem Elektromotor 36a angeordnet. Bezogen auf den Stator 37a des Elektromotors 36a ist die Elektronikeinheit 20a ortsfest angeordnet. Sie ist ebenfalls fest mit dem zweiten Koppelelement S32a verbunden. Die Elektronikeinheit 20a ist dazu vorgesehen, eine Bestromung für den Elektromotor 36a einzustellen. Die Spulen 39a des Elektromotors 36a sind an die Elektronikeinheit 20a angebunden. In einem Betrieb empfängt die Elektronikeinheit 20a die von der Steuer- und Regeleinheit 18a bereitgestellten Steuersignale, welche von der Verbindungseinheit 19a übertragen werden, und stellt eine den Steuersignalen entsprechende Bestromung ein. Über die Bestromung gibt die Elektronikeinheit 20a insbesondere eine Drehrichtung und eine Drehgeschwindigkeit des Elektromotors 36a vor. Indem der Elektromotor 36a als ein Schrittmotor ausgebildet ist, kann auf einen Sensor zur Bestimmung einer aktuellen Winkellage des Elektromotors 36a verzichtet werden. Die Elektronikeinheit 20a übermittelt die aktuelle Winkellage als Statussignal an die Steuer- und Regeleinheit 18a.

Um die Kupplungslamellen 24a, 25a mit einer entlang der Hauptrotationsachse 35a wirkenden Betätigungskraft zu beaufschlagen, umfasst der Betätigungsaktuator 17a einen Spreizmechanismus 41a. Der Spreizmechanismus 41a ist dazu vorgesehen, eine Relativdrehbewegung zwischen dem zweiten Koppelelement S32a und dem zweiten Hohlrad 34a in eine Linearbewegung umzusetzen. Der Spreizmechanismus 41a umfasst in dem dargestellten Ausführungsbeispiel zwei Spreizkörper 42a, 43a und zumindest einen zwischen den Spreizkörpern 42a, 43a angeordneten Wälzkörper 44a. Die Spreizkörper 42a, 43a weisen jeweils zumindest eine Lauffläche 45a, 46a auf, auf welcher der Wälzkörper 44a abwälzt. Die Laufflächen 45a, 46a sind in einem spitzen Winkel zueinander angeordnet. Bei einer Relativdrehbewegung drückt der zumindest eine Wälzkörper 44a die Spreizkörper 42a, 43a auseinander.

In dem dargestellten Ausführungsbeispiel bildet die Lauffläche 45a des ersten Spreizkörpers 42a eine degressive Rampe aus (vgl. Figur 4). Eine Form der Lauffläche 45a entspricht einer konvexen Krümmung. Die Lauffläche 46a des zweiten Spreizkörpers 43a bildet eine lineare Rampe aus. Alternativ kann auch lediglich eine der Laufflächen 45a, 46a eine Rampe ausbilden. Grundsätzlich sind hier unterschiedliche Ausgestaltungen mit ein oder zwei Rampen und/oder unterschiedlichen Formen der Rampen denkbar. Die Laufflächen 45a, 46a sind frei von Vertiefungen, die für eine Verrastung des Wälzkörpers 44a vorgesehen sind. Nicht näher dargestellte Spreizfedern zur Trennung der Kupplungslamellen 24a, 25a stellen eine Andruckkraft für einen permanenten Kontakt zwischen den Spreizkörpern 42a, 43a und dem Wälzkörper 44a bereit.

In einem Betrieb treibt der Elektromotor 36a das Sonnenrad 29a an. Eine Drehbewegung des Sonnenrads 29a wird von den Planetenrädern 31a, 32a in eine langsamere Drehbewegung des zweiten Hohlrads 34a übersetzt. Der Spreizmechanismus 41a wandelt die Drehbewegung des zweiten Hohlrads 34a in die Linearbewegung um, welche eine Betätigungskraft für die Schalteinheit S3a bereitstellt. Ein Übersetzungsverhältnis des Planetenradgetriebes 28a ist dabei so groß, dass ein Drehmoment, das durch den Spreizmechanismus 41a beim Halten eines beliebigen Schaltzustands auf das zweite Hohlrad 34a wirkt, durch die innere Reibung des Planetenradgetriebes 28a abgestützt wird. Der Elektromotor 36a ist beim Halten eines beliebigen Schaltzustands kraftfrei.

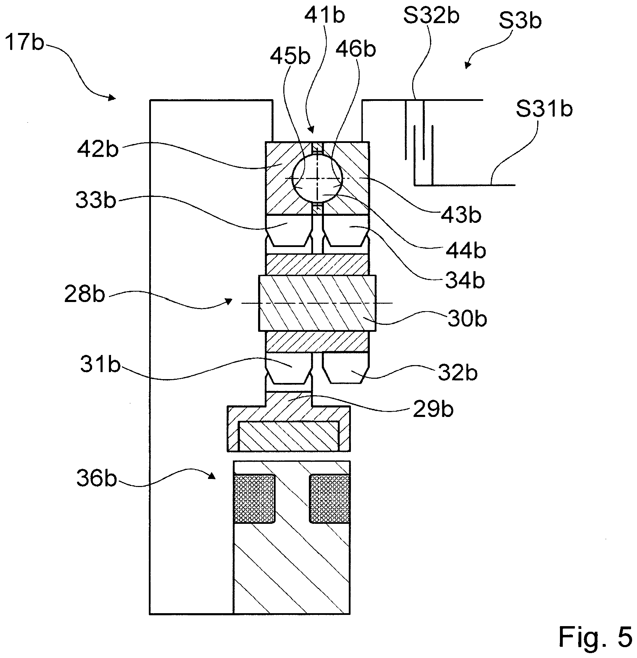

In der Figur 5 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 4 verwiesen werden kann. Zur Unterscheidung der Ausführungsbeispiele ist der Buchstabe a in den Bezugszeichen des Ausführungsbeispiels in den Figuren 1 bis 4 durch den Buchstaben b in den Bezugszeichen des Ausführungsbeispiels der Figur 5 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 4 verwiesen werden.

Figur 5 zeigt eine alternative Ausgestaltung einer Schalteinheit S3b eines Kraftfahrzeuggetriebes. Die Schalteinheit S3b umfasst zwei relativ zueinander verdrehbare, drehfest miteinander verbindbare Koppelelemente S31b, S32b sowie einen elektromechanischen Betätigungsaktuator 17b, der mechanisch selbsthemmend ausgeführt ist. Der Betätigungsaktuator 17b weist ein Planetenradgetriebe 28b nach dem Wolfrom-Prinzip auf. Das Planetenradgetriebe 28b umfasst ein Sonnenrad 29b, einen Planetenradträger 30b, auf dem Planetenradträger 30b jeweils paarweise angeordnete Planetenräder 31b, 32b sowie zwei Hohlräder 33b, 34b, von denen eines drehfest mit einem der Koppelelemente S31b, S32b verbunden ist.

Weiter weist der Betätigungsaktuator 17b einen Elektromotor 36b auf, der zumindest teilweise in das Planetenradgetriebe 28b integriert ist. Zur Betätigung der Schalteinheit S3b weist der Betätigungsaktuator 17b einen Spreizmechanismus 41b auf, der dazu vorgesehen ist, eine Relativdrehbewegung zwischen dem Koppelelement S32b, mit dem das eine Hohlrad 33b fest verbunden ist, und dem zweiten Hohlrad 34b in eine Linearbewegung umzusetzen.

Im Unterschied zu dem vorangegangenen Ausführungsbeispiel ist der Spreizmechanismus 41b zwischen den zwei Hohlrädern 33b, 34b angeordnet. Der Spreizmechanismus 41b weist zwei Spreizkörper 42b, 43b auf, die durch die Hohlräder 33b, 34b ausgebildet sind. Weiter umfasst der Spreizmechanismus 41b zumindest einen Wälzkörper 44b, welcher zwischen den Spreizkörpern 42b, 43b angeordnet ist. Die Spreizkörper 42b, 43b weisen jeweils zumindest eine Lauffläche 45b, 46b auf. Die Laufflächen 45b, 46b sind direkt in die Hohlräder 33b, 34b eingebracht. Zumindest eine der Laufflächen 45b, 46b bildet eine Rampe aus. Der Spreizmechanismus 41b bildet gleichzeitig eine Lagerung der beiden Hohlräder 33b, 34b relativ zueinander aus.

### Bezugszeichenliste

- 10: Getriebegehäuse
- 11: Getriebewelle
- 12: Getriebewelle
- 13: Getriebewelle
- 14: Getriebewelle
- 15: Getriebewelle
- 16: Getriebewelle
- 17: Betätigungsaktuator
- 18: Steuer- und/oder Regeleinheit
- 19: Verbindungseinheit
- 20: Elektronikeinheit
- 21: Sensoreinheit
- 22: Primärspule
- 23: Sekundärspule
- 24: Kupplungslamelle
- 25: Kupplungslamelle
- 26: Innenlamellenträger
- 27: Außenlamellenträger
- 28: Planetenradgetriebe
- 29: Sonnenrad
- 30: Planetenradträger
- 31: Planetenrad
- 32: Planetenrad
- 33: Hohlrad
- 34: Hohlrad
- 35: Hauptrotationsachse
- 36: Elektromotor
- 37: Stator
- 38: Rotor
- 39: Spulen
- 40: Permanentmagnet
- 41: Spreizmechanismus
- 42: Spreizkörper
- 43: Spreizkörper
- 44: Wälzkörper
- 45: Lauffläche
- 46: Lauffläche
- P1: Planetenradstufe
- P2: Planetenradstufe
- P3: Planetenradstufen
- P4: Planetenradstufen
- S1: Schalteinheit
- S2: Schalteinheit
- S3: Schalteinheit
- S4: Schalteinheit
- S5: Schalteinheit
- S6: Schalteinheit
- S11: Koppelelement
- S12: Koppelelement
- S21: Koppelelement
- S22: Koppelelement
- S31: Koppelelement
- S32: Koppelelement
- S41: Koppelelement
- S42: Koppelelement
- S51: Koppelelement
- S52: Koppelelement
- S61: Koppelelement
- S62: Koppelelement

## Patentansprüche

1. Kraftfahrzeuggetriebe, insbesondere Mehrstufengetriebe, mit zumindest einer Schalteinheit (S3a, S6a; S3b), die zwei relativ zueinander verdrehbare, drehfest miteinander verbindbare Koppelelemente (S31a, S32a, S61a, S62a; S31b, S32b) sowie einen elektromechanischen Betätigungsaktuator (17a; 17b) mit einem Elektromotor (36a; 36b) aufweist, und mit einer Steuer- und/oder Regeleinheit (18a), die zur Ansteuerung des zumindest einen Betätigungsaktuators (17a; 17b) vorgesehen ist,
und mit einer induktiven Verbindungseinheit (19a), die die Steuer- und/oder Regeleinheit (18a) und den Betätigungsaktuator (17a; 17b) miteinander verbindet und die zumindest dazu vorgesehen ist, den Betätigungsaktuator (17a; 17b) mit elektrischer Energie zu versorgen,
wobei die induktive Verbindungseinheit (19a) eine gehäuseseitige Primärspule (22a), die mit der Steuer- und/oder Regeleinheit (18a) verbunden ist, und eine kupplungsseitige Sekundärspule (23a), die mit dem Betätigungsaktuator (17a; 17b) verbunden ist, umfasst,
**dadurch gekennzeichnet, dass**
der Betätigungsaktuator (17a; 17b) ein Planetenradgetriebe (28a; 28b) nach dem Wolfrom-Prinzip aufweist, wobei das Planetenradgetriebe (28a; 28b) ein Sonnenrad (29a; 29b), einen Planetenradträger (30a; 30b), auf dem Planetenradträger (30a; 30b) jeweils paarweise angeordnete Planetenräder (31a; 31b, 32a; 32b) sowie zwei Hohlräder (33a; 33b, 34a; 34b), nämlich ein erstes Hohlrad (33a; 33b) und ein zweites Hohlrad (34a; 34b), von denen eines drehfest mit einem der Koppelelemente (S31a; S31b, S32a; S32b) verbunden ist, aufweist, wobei die Planetenräder (31a, 32a; 31b, 32b) des Planetenradgetriebes (28a; 28b) paarweise drehfest miteinander verbunden sind,
und wobei der Elektromotor (36a; 36b) in das Planetenradgetriebe (28a; 28b) integriert ist, wobei der Elektromotor (36a; 36b) einen gegenüber dem ersten Hohlrad (33a; 33b) ortsfest angeordneten Stator (37a) und einen drehfest mit dem Sonnenrad (29a; 29b) verbundenen Rotor (38a) aufweist, wobei der Stator (37a) drehfest mit dem zweiten Koppelelement (S32a) verbunden ist und eine Mehrzahl von Spulen (39a) umfasst,
wobei das Sonnenrad (29a; 29b) an seinem Innenumfang eine Aufnahme für Permanentmagnete (40a) des Rotors (38a) ausbildet, wobei die Permanentmagnete (40a) gleichmäßig über den Innenumfang des Sonnenrads (29a) verteilt sind.

2. Kraftfahrzeuggetriebe nach Anspruch 1,
**dadurch gekennzeichnet, dass**
die induktive Verbindungseinheit (19a) zur Übertragung von Steuersignalen für eine Ansteuerung und/oder Überwachung des Betätigungsaktuators (17a) vorgesehen ist.

3. Kraftfahrzeuggetriebe nach einem der vorhergehenden Ansprüche,
**gekennzeichnet durch**
zumindest eine zwischen der Primärspule (22a) und der Sekundärspule (23a) angeordnete Getriebewelle (14a), die zumindest teilweise aus einem Material mit einer niedrigen magnetischen Permeabilität besteht.

4. Kraftfahrzeuggetriebe nach einem der vorhergehenden Ansprüche,
**dadurch gekennzeichnet, dass**
der Betätigungsaktuator (17a; 17b) mechanisch selbsthemmend ausgeführt ist.

5. Kraftfahrzeuggetriebe nach einem der vorhergehenden Ansprüche,
**dadurch gekennzeichnet, dass**
der Betätigungsaktuator (17a; 17b) einen Elektromotor (36a; 36b) aufweist, der zumindest teilweise in das Planetenradgetriebe (28a; 28b) integriert ist, wobei der Betätigungsaktuator (17a; 17b) zur Betätigung der Schalteinheit (S3a; S3b) einen Spreizmechanismus (41a; 41b) aufweist, der dazu vorgesehen ist, eine Relativdrehbewegung zwischen dem Koppelelement (232a; S32b), mit dem das eine Hohlrad (33a; 33b) fest verbunden ist, und dem zweiten Hohlrad (34a; 34b) in eine Linearbewegung umzusetzen.

6. Kraftfahrzeuggetriebe nach einem der Ansprüche 1 bis 4,
**dadurch gekennzeichnet, dass** ein Spreizmechanismus (41b) zwischen den zwei Hohlrädern (33b; 34b) angeordnet ist und zwei Spreizkörper (42b; 43b) aufweist, die durch die Hohlräder (33b; 34b) ausgebildet sind, wobei der Spreizmechanismus (41b) zumindest einen Wälzkörper (44b) umfasst, welcher zwischen den Spreizkörpern (42b, 43b) angeordnet ist und die Spreizkörper (42b, 43b) jeweils zumindest eine Lauffläche (45b, 46b) aufweisen, welche direkt in die Hohlräder (33b, 34b) eingebracht sind, wobei zumindest eine der Laufflächen (45b, 46b) eine Rampe ausbildet und wobei der Spreizmechanismus (41b) gleichzeitig eine Lagerung der beiden Hohlräder 33b, 34b relativ zueinander ausbildet.

## Claims

1. Motor vehicle transmission, in particular multi-step transmission, comprising at least one shifting unit (S3a, S6a; S3b), which has two coupling elements (S31a, S32a, S61a, S62a; S31b, S32b) that can be rotated relative to one another and that can be connected for conjoint rotation with one another as well as an electromechanical actuator (17a; 17b) having an electric motor (36a; 36b), and comprising an open-loop and/or closed-loop control unit (18a), which is provided for controlling the at least one actuator (17a; 17b), and comprising an inductive connection unit (19a), which interconnects the open-loop and/or closed-loop control unit (18a) and the actuator (17a; 17b) and which is at least provided for supplying the actuator (17a; 17b) with electrical energy, wherein the inductive connection unit (19a) comprises a housing-side primary coil (22a), which is connected to the open-loop and/or closed-loop control unit (18a), and a clutch-side secondary coil (23a), which is connected to the actuator (17a; 17b), **characterised in that** the actuator (17a; 17b) comprises a planetary gear train (28; 28b) as per the Wolfrom principle, wherein the planetary gear train (28a; 28b) comprises a sun gear (29a; 29b), a planet carrier (30a; 30b), planet gears (31a; 31b, 32a; 32b) in each case arranged in pairs on the planet carrier (30a; 30b), and two ring gears (33a; 33b, 34a; 34b), namely a first ring gear (33a; 33b) and a second ring gear (34a; 34b), one of which is connected to one of the coupling elements (S31a; S31b, S32a; S32b) for conjoint rotation therewith, wherein the planet gears (31a, 32a; 31b, 32b) of the planetary gear train (28a; 28b) are connected in pairs for conjoint rotation with one another, and wherein the electric motor (36a; 36b) is integrated in the planetary gear train (28a; 28b), wherein the electric motor (36a; 36b) comprises a
stator (37a) arranged in a stationary manner relative to the first ring gear (33a; 33b) and a rotor (38a) connected to the sun gear (29a; 29b) for conjoint rotation therewith, wherein the stator (37a) is connected to the second coupling element (S32a) in a rotationally fixed manner and comprises a plurality of coils (39a), wherein the sun gear (29a; 29b) forms on its inner circumference a receptacle for permanent magnets (40a) of the rotor (38a), wherein the permanent magnets (40a) are distributed uniformly over the inner circumference of the sun gear (29a).

2. Motor vehicle transmission according to claim 1, **characterised in that** the inductive connection unit (19a) is provided for transmitting control signals for controlling and/or monitoring the actuator (17a).

3. Motor vehicle transmission according to any of the preceding claims, **characterised by** at least one transmission shaft (14a) arranged between the primary coil (22a) and the secondary coil (23a) and consisting at least in part of a material having a low magnetic permeability.

4. Motor vehicle transmission according to any of the preceding claims, **characterised in that** the actuator (17a; 17b) is designed to be mechanically self-locking.

5. Motor vehicle transmission according to any of the preceding claims, **characterised in that** the actuator (17a; 17b) comprises an electric motor (36a; 36b), which is integrated at least in part in the planetary gear train (28a; 28b), wherein the actuator (17a; 17b), in order to actuate the shifting unit (S3a; S3b), comprises a spreading mechanism that is provided for converting a relative rotational movement between the coupling element (232a; S32b), to which one ring gear (33a; 33b) is rigidly connected, and the second ring gear (34a; 34b) into a linear movement.

6. Motor vehicle transmission according to any of claims 1 to 4, **characterised in that** a spreading mechanism (41b) is arranged between the two ring gears (33b; 34b)
and comprises two spreading bodies (42b; 43b) formed by the ring gears (33b, 34b), wherein the spreading mechanism (41b) comprises at least one rolling body (44b), which is arranged between the spreading bodies (42b, 43b) and the spreading bodies (42b, 43b) each comprise at least one running surface (45b, 46b), which are made directly in the ring gears (33b, 34b), wherein at least one of the running surfaces (45b, 46b) forms a ramp and wherein the spreading mechanism (41 b) simultaneously forms a bearing for the two ring gears 33b, 34b relative to one another.

## Revendications

1. Transmission de véhicule à moteur, en particulier transmission à variation échelonnée, comprenant au moins un dispositif de commutation (S3a, S6a, S3b), qui présente deux éléments d'accouplement pouvant s'accoupler solidaire en rotation (S31a, S32a S61a, S62a, S31b, S32b), pouvant se déplacer l'un par rapport à l'autre ainsi qu'un actionneur électromécanique (17a, 17b) comprenant un moteur électrique (36a, 36b), et une unité de commande et/ou de réglage (18a) qui sert à commander ledit actionneur (17a, 17b),
et une unité de liaison inductive (19a) qui relie ensemble l'unité de commande et/ou de réglage (18a) et l'actionneur (17a, 17b) et qui sert au moins à alimenter en énergie électrique l'actionneur (17a, 17b),
l'unité de liaison inductive (19a) comportant une bobine primaire (22a) côté boîtier qui est reliée à l'unité de commande et/ou de réglage (18a) et une bobine secondaire (23a) côté accouplement qui est relié à l'actionneur (17a, 17b),
**caractérisée en ce que**
l'actionneur (17a 17b) présente un train planétaire (28a, 28b) de type Wolfrom, la transmission à trains planétaires (28a, 28b) présentant un pignon planétaire (29a, 29b), un support de pignon planétaire (30a, 30b) sur ledit support de pignon planétaire (30a, 30b) des pignons planétaires (31a, 31b, 32a, 32b) respectivement disposés en paire ainsi que deux couronnes (33a, 33b, 34a, 34b), notamment une première couronne (33a, 33b) et une seconde couronne (34a, 34b), dont une d'entre elles est reliée à l'un des éléments d'accouplement (S31a, S31b, S32a, S32b), les pignons planétaires (31a, 32a, 31b, 32b) de la transmission à trains planétaires (28a, 28b) étant reliés ensemble solidaire en rotation par paire,
et le moteur électrique (36a, 36b) étant intégré dans la transmission à trains planétaires (28a, 28b), le moteur électrique (36a, 36b) présentant un stator fixe (37a) par rapport à la première couronne (33a, 33b) et un rotor (8a) relié solidaire en rotation au pignon planétaire (29a, 29b), le stator (37a) étant relié au second élément d'accouplement (S32a) et comprenant une pluralité de bobines (39a),
le pignon planétaire (29a, 29b) formant sur sa périphérie intérieure un logement pour des aimants permanents (40a) du rotor (38a), les aimants permanents (40a) étant répartis de manière uniforme sur la périphérie intérieure du pignon planétaire.

2. Transmission de véhicule à moteur selon la revendication 1, **caractérisée en ce que** l'unité de liaison inductive (19a) sert à transférer les signaux de commande pour une commande et/ou une surveillance de l'actionneur (17a).

3. Transmission de véhicule à moteur selon l'une quelconque des revendications précédentes, **caractérisée par** au moins un arbre de transmission disposé entre la bobine primaire (22a) et la bobine secondaire (23a) qui se compose au moins à certains endroits d'un matériau présentant une faible perméabilité magnétique.

4. Transmission de véhicule à moteur selon l'une quelconque des revendications précédentes, **caractérisée en ce que** l'actionneur (17a, 17b) est conçu comme un blocage automatique mécanique.

5. Transmission de véhicule à moteur selon l'une quelconque des revendications précédentes, **caractérisée en ce que** l'actionneur (17a, 17b) présente un moteur électrique (36a, 36b) qui est intégré au moins à certains endroits dans la transmission à trains planétaires (28a, 28b), l'actionneur (17a, 17b) présentant un mécanisme d'extension (41a, 41b) pour actionner l'unité de commutation (S3a, S3b) qui sert à convertir un mouvement de rotation relatif entre l'élément d'accouplement (S32a, S32b), auquel ladite couronne (33a, 33b) est reliée solidement, et la seconde couronne (34a, 34b) en un mouvement linéaire.

6. Transmission de véhicule à moteur selon l'une des revendications 1 à 4, **caractérisée en ce qu'**un mécanisme d'extension (41b) est disposé entre les deux couronnes (33b, 34b) et présente deux corps d'extension (42b, 43b) qui sont conçus sous la forme des couronnes (33b, 34b), le mécanisme d'extension (41b) comportant au moins un corps cylindrique (44b) qui est disposé entre les corps d'extension (42b, 43b) et les corps d'extension (42b, 43b) présentent respectivement au moins une surface de roulement (45b, 46b) qui sont amenées directement dans les couronnes (33b, 34b) au moins l'une des surfaces de roulement (45b, 46b) étant conçue sous la forme d'une rampe et le mécanisme d'extension (41b) formant simultanément un support des deux couronnes (33b, 34b) l'une par rapport à l'autre.
